# FASCICULE DE BREVET EUROPEEN

(11) **EP 2 030 143 B1**
(45) Date de publication et mention de la délivrance du brevet: **14.07.2010**
(21) Numéro de dépôt: 07788819.6
(22) Date de dépôt: 31.05.2007
(51) Int. Cl.: G06F 21/04, G06F 21/06

(54) **DISPOSITIF DE PROTECTION CONTRE LES INTRUSIONS D'APPAREILS ELECTRONIQUES**
EINRICHTUNG ZUR ABSCHIRMUNG VOR STÖRUNGEN AUS ELEKTRISCHEN GERÄTEN
DEVICE TO SHIELD AGAINST INTERFERENCE FROM ELECTRICAL APPLIANCES

(30) Priorité: 02.06.2006 FR 0604952
(43) Date de publication de la demande: 04.03.2009
(73) Titulaire: Ingenico France, 92200 Neuilly Sur Seine (FR)
(72) Inventeur: BONNET, Eric, F-75015 Paris (FR); GARY, Didier, F-75015 Paris (FR); VASSY, Lilian, F-75015 Paris (FR)
(74) Mandataire: Bioret, Ludovic
(86) Numéro de dépôt international: PCT/FR2007/000906
(87) Numéro de publication internationale: WO 2007/141410

(56) Documents cités:
- DE-U1-202005 017 140
- FR-A1- 2 806 507
- FR-A1- 2 815 733
- FR-A1- 2 860 643

## Description

La présente invention concerne le domaine technique général de la protection contre les intrusions d'appareils électroniques.

Plus particulièrement, la présente invention concerne le domaine technique de la protection contre les intrusions d'appareil électronique pouvant posséder un clavier pour saisir des données confidentielles.

Elle est notamment adaptée aux terminaux de paiement électronique, aux téléphones portables, aux ordinateurs, ou à tout autre type de terminal sur lequel un utilisateur doit saisir des données confidentielles.

### PRESENTATION GENERALE DU CONTEXTE ET DE L'ART ANTERIEUR

Le but d'une fraude sur un terminal sécurisé consiste à essayer de détecter les informations confidentielles stockées dans ce terminal ou saisies par un utilisateur sur un tel terminal afin de les réutiliser à ses dépends.

Un moyen connu pour accéder frauduleusement aux informations confidentielles saisies par l'utilisateur consiste à incorporer dans le terminal des espions afin de détecter les touches saisies par l'utilisateur.

L'incorporation d'espions dans le terminal nécessite l'ouverture de ce terminal.

Il a déjà été proposé des solutions pour garantir la sécurité des terminaux sur lesquels des informations confidentielles doivent être saisies.

Le document DE202005017140-U divulgue un circuit protégé contre les intrusions par un boitier revêtu d'une fine couche conductrice.

Le document FR2860643 divulgue un dispositif anti-intrusion pour la protection de boîtier d'un terminal de paiement électronique ou d'un boîtier de saisie de code confidentiel (code PIN).

Le document FR 2 815 733 décrit un dispositif de sécurité pour un boîtier comprenant un capot, une carte électronique et une membrane souple sur laquelle sont moulées des touches.

Le dispositif de sécurité comprend une touche dédiée de la membrane - ci-après dénommée « fausse touche ».

Le dispositif de sécurité comprend également deux bornes électriquement conductrices disposées sur la carte électronique, en regard de la fausse touche, et reliées à des moyens de traitement du boîtier.

La fausse touche comporte à sa base une partie électriquement conductrice qui fait face aux deux bornes.

Dans un état de fonctionnement normal du boîtier, la fausse touche est maintenue pressée avec un effort déterminé, pour fermer un circuit électrique de détection d'intrusion.

L'ouverture du boîtier par un tiers pour y insérer des espions induit une ouverture du circuit électrique de détection provoquée par le relâchement de la fausse touche.

Cette ouverture du circuit est détectée par les moyens de traitement du dispositif qui active des fonctions anti-fraudes du boîtier, comme par exemple la mise hors service du boîtier ou encore l'effacement des données confidentielles.

Cependant, un inconvénient de ce type de dispositif est qu'il ne comprend aucun moyen permettant de protéger la fausse touche contre un éventuel piratage.

Ainsi, un tiers malveillant qui parvient à court-circuiter la fausse touche rend le dispositif de sécurité inopérant, de sorte qu'une ouverture ultérieure du boîtier n'est pas détectée et n'entraîne pas l'activation des fonctions anti-fraudes du boîtier.

Un but de la présente invention est de proposer un dispositif amélioré de protection contre les intrusions d'appareils électroniques contenant un clavier pour saisir des données confidentielles.

### PRESENTATION DE L'INVENTION

A cet effet on prévoit un dispositif anti-intrusion pour un boîtier comprenant :
o au moins deux bornes électriquement conductrices distinctes disposées sur une carte électronique et reliées à des moyens de traitement,
o au moins un élément mobile comportant un circuit de protection disposé en regard des deux bornes électriquement conductrices et reliant les bornes électriquement conductrices de manière à fermer un circuit électrique dans une position normale d'utilisation du boîtier,
dans lequel le circuit de protection comprend au moins une piste électriquement conductrice disposée de manière à être sectionnée lors d'une intrusion par perçage ou découpage au niveau de l'élément mobile.

Des aspects préférés, mais non limitatifs du procédé d'activation selon l'invention sont les suivants, seuls ou en combinaison :
- l'élément mobile et le circuit de protection sont disposés de manière à assurer l'ouverture du circuit électrique fermé suite au déplacement du boîtier relativement au dispositif,
- les moyens appropriés pour assurer l'ouverture comprennent au moins une piste électriquement conductrice,
- la piste électriquement conductrice est disposée dans un substrat,
- le substrat comprend au moins deux pistes de connexion disposées sur une des faces du substrat, les deux pistes de connexion s'étendant dans un plan distinct d'un plan dans lequel s'étend la piste électriquement conductrice et étant reliées à celle-ci par au moins deux ponts,
- les pistes de connexion sont réalisées en carbone et la piste électriquement conductrice est réalisée en cuivre par exemple,
- les pistes de connexion sont disposées dans une région centrale du substrat,
- la piste électriquement conductrice est une piste en forme de treillis,
- le pas du treillis est inférieure à 1 millimètres, préférentiellement inférieure à 0.5 millimètres, et encore plus préférentiellement environ égale à 0.3 millimètres,
- le substrat peut être souple et recouvre en totalité ou en partie la surface supérieure de la carte électronique,
- une couche opaque est disposée sur le substrat ou le substrat est en un matériau opaque,
- les bornes électriquement conductrices de la carte électronique peuvent présenter une symétrie de révolution.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 illustre en vue en perspective un boîtier comprenant un mode de réalisation du dispositif anti-intrusion selon l'invention,
- la figure 2 est une vue en coupe du boîtier illustré à la figure 1,
- la figure 3 est une représentation en perspective d'un mode de réalisation d'un circuit de protection du dispositif anti-intrusion selon l'invention,
- la figure 4 est une vue en coupe du circuit de protection illustré à la figure 3,
- la figure 5 est une vue de dessus d'un mode de réalisation de bornes de connexion du dispositif selon l'invention,
- la figure 6 illustre un mode de réalisation du circuit de protection et des bornes de connexion illustrées à la figure 5.

### DESCRIPTION DE L'INVENTION

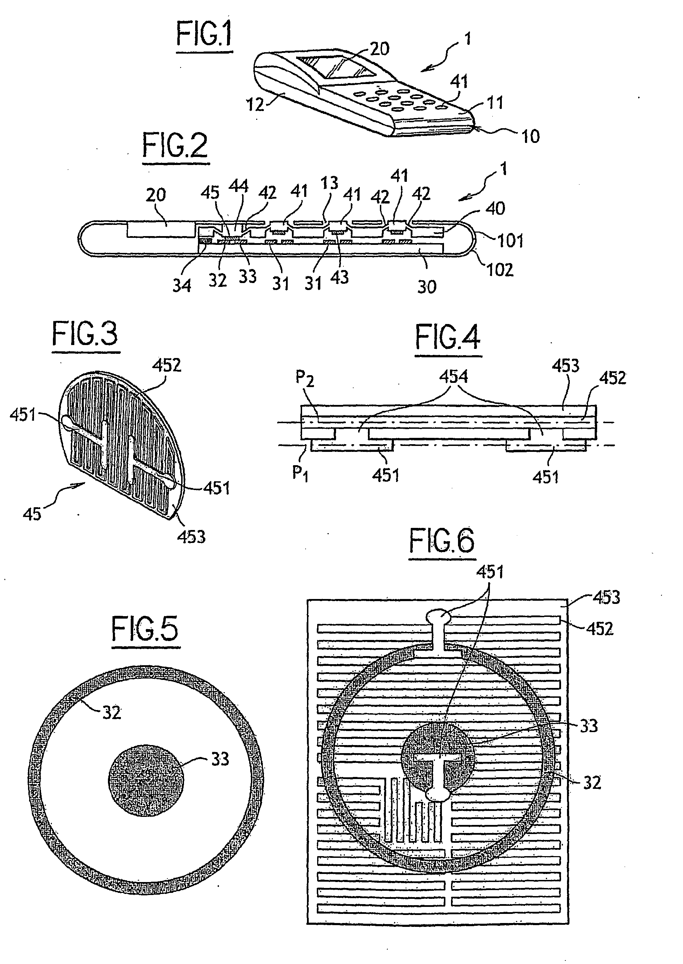

En référence aux figures 1 et 2, on a illustré un exemple de boîtier 1 comprenant le dispositif anti-intrusion selon l'invention.

Le boîtier 1 comprend un capot 10, un écran d'affichage 20, une carte électronique 30 et une membrane souple 40.

Le capot 10 est constitué d'une portion supérieure de capot 101 et d'une portion inférieure de capot 102.

L'écran d'affichage 20 est fixé à la portion supérieure de capot 101.

La carte électronique 30 est un circuit imprimé comprenant des moyens de traitement et des contacts électriquement conducteurs 31 distincts entrelacés destinés à être en regard de touches de la membrane souple 40 servant de moyens de saisis. Ces contacts 31 sont par exemple réalisés en métal. Les contacts électriquement conducteurs 31 sont reliés à des moyens de traitement 34, par exemple de type microprocesseur.

La membrane souple 40 est réalisée par exemple en silicone ou en polyuréthane. Cette membrane 40 comprend des touches 41 moulées, chaque touche 41 correspondant à une portion de la membrane reliée au reste de la membrane par une lèvre 42 périphérique. Chaque touche 41 traverse la portion supérieure de capot 101 par une ouverture 13 de ce dernier pour être accessible de l'extérieur. Chaque touche 41 comprend, sur sa face en regard de la carte électronique 30, une partie électriquement conductrice 43. Chaque touche 41 est disposée en vis-à-vis de deux contacts électriquement conducteurs 31.

Selon le mode de fonctionnement classique d'un clavier à membrane, une pression sur une touche 41 du clavier permet de joindre la partie électriquement conductrice 43 correspondante avec les deux contacts 31 sous-jacents de manière à fermer un circuit électrique sur la carte électronique 30. Cette fermeture est détectée par les moyens de traitement qui stockent dans une mémoire la valeur correspondant à la touche saisie.

Le boîtier 1 comporte un dispositif anti-intrusion comprenant au moins un élément mobile 44. Cet élément mobile est une fausse touche 44 prévue au niveau de la membrane 40 et qui n'est pas visible depuis l'extérieur du boîtier 1.

La fausse touche 44 est, de façon analogue aux touches 41, reliée au reste de la membrane 40 par une lèvre périphérique 42 et comprend un circuit de protection 45 disposé en regard de deux bornes électriquement conductrices 32,33 et reliant les bornes électriquement conductrices 32, 33 de manière à fermer un circuit électrique (ci-après dénommé le circuit électrique fermé) dans une position normale d'utilisation du boîtier, c'est-à-dire lorsque la portion supérieure de capot 101 est fixée à la portion inférieure de capot 102. Le circuit de protection sera décrit plus en détail dans la suite.

Les deux bornes électriquement conductrices 32, 33 de la carte électronique sont disposées en vis-à-vis sous la fausse touche 44. Les deux bornes électriquement conductrices 32, 33 forment deux portions d'une ligne de sécurité reliée aux moyens de traitement 34.

Les moyens de traitement 34 sont adaptés à déterminer si les deux bornes électriquement conductrices 32, 33 sont connectées électriquement, par exemple en mesurant la résistance aux bornes de la ligne de sécurité.

Lorsqu'un individu tente d'accéder au contenu du boîtier 1 en retirant la portion supérieure de capot 101, la fausse touche 44 n'est plus sollicitée par la portion supérieure de capot 101 et est ramenée par l'action de la lèvre 42 vers une position de repos à laquelle le circuit de protection électriquement conducteur 45 n'est plus en contact avec les bornes électriquement conductrices 32, 33.

Les moyens de traitement détectent une modification de la résistance de la ligne de sécurité, indiquant qu'une tentative d'ouverture du dispositif 10 a lieu, et mettent en oeuvre des fonctions anti-fraudes du boîtier, comme par exemple la mise hors service du boîtier 1 ou encore l'effacement des données confidentielles stockées dans une mémoire du boîtier 1.

En référence à la figure 3, on a illustré un mode de réalisation du circuit de protection 45.

Le circuit de protection 45 comprend des pistes de connexion 451, un substrat 453 et des moyens appropriés pour assurer l'ouverture du circuit électrique fermé.

Les moyens appropriés pour assurer l'ouverture du circuit électrique fermé permettent d'ouvrir le circuit électrique fermé en réponse à une détérioration du circuit de protection (par perçage, découpage, etc.); ou de détecter une variation de résistance due à une variation de l'effort de pression exercé par le boîtier.

Ainsi, les moyens appropriés permettent de détecter la rupture d'un contact électrique, soit par déplacement du dispositif par sa mobilité, soit par ouverture par détérioration du circuit de protection.

Les moyens appropriés comprennent au moins une piste électriquement conductrice 452.

Dans le mode de réalisation illustré aux figures 3 et 4, la piste électriquement conductrice 452 est disposée à l'intérieur du substrat 453.

Ceci permet de faciliter la production à l'échelle industrielle du circuit de protection 45. Par ailleurs, cela permet également d'adapter le circuit de protection 45 sur les boîtiers existants comprenant une fausse touche 44 tels que les boîtiers décrits dans le document FR 2 815 733 par clipsage du circuit de protection à la base de la fausse touche.

La piste électriquement conductrice 452 peut être réalisée en cuivre, à un pas très fin de manière industrielle.

La piste électriquement conductrice 452 est disposée de manière à être sectionnée lors d'une intrusion par perçage ou découpage au niveau de la fausse touche.

Plus précisément, la largeur de la piste électriquement conductrice 452 et la distance séparant deux portions adjacentes de la piste 452 (pas du treillis de protection) sont prévus suffisamment étroits pour induire un sectionnement de la piste conductrice 452 lors d'une intrusion par perçage ou découpage.

Un exemple de mode de réalisation du circuit de protection est le suivant :
- diamètre du circuit de protection = 10 millimètres,
- hauteur du circuit de protection = 0.25 millimètres,
- largeur de la piste de protection = 0.15 millimètres,
- pas du treillis inférieure à 1 millimètres, préférentiellement inférieure à 0.5 millimètre, et encore plus préférentiellement environ égale à 0.3 millimètres.
- matériaux utilisés pour constituer le circuit de protection :
   o Substrat : époxy ou polyéthylène naphtalate (PEN),
   o Pistes du treillis : cuivre,
   o Pistes de connexion : carbone ou argent ou or.

Cet exemple de circuit de protection peut être avantageusement utilisé avec une fausse touche de diamètre 6millimètres.

Dans un mode de réalisation, la piste électriquement conductrice 452 est une piste en forme de treillis.

On entend, dans le cadre de la présente invention par « treillis », un motif en créneau tel qu'illustré à la figure 3, ou en spirale.

Par ailleurs, le treillis peut être en deux dimensions (2D) ou en trois dimensions (comme par exemple un quadrillage de type raquette de tennis).

Enfin, le treillis peut être réalisé sur plusieurs couches séparées par une épaisseur de substrat supplémentaire.

Les pistes de connexion 451 sont disposées sur une des faces du substrat 453. Dans le mode de réalisation illustré aux figures 3 et 4, les pistes de connexion 451 sont au nombre de deux. Les pistes de connexion 451 s'étendent dans un plan P1 distinct d'un plan P2 dans lequel s'étend la piste électriquement conductrice 452. Les plans P1 et P2 sont isolés électriquement (par un isolant 455), sauf dans les zones où se trouvent les ponts 454.

Les deux pistes de connexion 451 sont reliées à la piste électriquement conductrice 452 par au moins deux ponts 454 électriquement conducteurs illustré à la figure 4.

Le fait que les pistes de connexion 451 et la piste électriquement conductrice 452 s'étendent dans des plans distincts assure une rupture du circuit électrique fermé quelque soit la zone du circuit de protection 45 dans laquelle un perçage ou un découpage est réalisé.

Dans certains modes de réalisation, les pistes de connexion 451 sont disposées dans une région centrale du substrat 453. Ceci permet d'augmenter la difficulté de court-circuitage du circuit de protection 45.

Les deux pistes de connexion 451 sont destinées à venir respectivement en contact avec une des deux bornes de connexion 32, 33 disposées sur la carte électronique 30.

Dans un mode de réalisation, le substrat 453 comprend une couche opaque. Ainsi, la piste électriquement conductrice 452 disposée à l'intérieur du substrat 453 n'est pas visible de l'extérieur. De même, la position des pistes de connexion 451 n'est pas visible de l'extérieur lorsque le circuit de protection 45 est en place. Ceci permet d'augmenter la difficulté pour un tiers malveillant de court-circuiter le circuit de protection 45.

Dans un mode de réalisation, le substrat 453 recouvre une surface plus étendue que la région dans laquelle se trouvent les bornes électriquement conductrices 32, 33. Ceci permet de protéger une zone de la carte électronique plus étendue que la fausse touche 44.

Dans un mode de réalisation, le substrat 453 est un substrat souple qui recouvre toute la surface de la carte électronique 30 et est collé sur la carte électronique. Dans ce cas, les pistes de connexions 451 sont par exemple réalisées en carbone pour assurer un arrachage des pistes de connexions 451 lors d'une tentative de décollement du substrat souple 453.

Dans le mode de réalisation illustré à la figure 4, le circuit de protection comprend 4 couches de composants différents :
- le substrat en époxy 453,
- le treillis de cuivre 452,
- une couche de vernis isolant comprenant deux évidements de sorte que la couche de vernis ne recouvre pas la couche comprenant le treillis de cuivre au niveau desdits évidements,
- une couche d'encre de carbone déposée au niveau des évidements par sérigraphie de sorte à ce que le carbone communique avec la couche du treillis de cuivre : ces communications forment les ponts 454.

Dans un mode de réalisation illustré à la figure 5, les bornes électriquement conductrices 32, 33 présentent une symétrie de révolution. Dans ce cas, et comme illustré à la figure 6, les pistes de connexions 451 sont adaptées à la forme des bornes électriquement conductrices 32, 33, de sorte que l'une des pistes de connexion entre en contact avec l'une des bornes de connexion 32, et l'autre des pistes de connexion 451 soit en contact avec l'autre des bornes de connexion 33. Ceci permet de faciliter la mise en contact des bornes électriquement conductrices 32, 33 avec les pistes de connexion 451, quelle que soit l'orientation du dispositif.

Le lecteur aura compris que de nombreuses modifications peuvent être apportées sans sortir matériellement des nouveaux enseignements et des avantages décrits ici.

Par exemple, le circuit de protection 45 peut ne pas comprendre de substrat, la piste électriquement conductrice 452 étant, dans ce cas, disposée à l'intérieur de la membrane souple 40 comprenant les touches, et les pistes de connexion étant disposées sur la face de la membrane en regard de la carte électronique, en vis-à-vis des bornes de connexion.

Par ailleurs, le boîtier peut comprendre une pluralité de fausses touches.

Enfin, bien que le dispositif anti-intrusion selon l'invention ait été décrit dans le cas d'un boîtier sur lequel un utilisateur saisit des données confidentielles, la présente invention peut également être mise en oeuvre dans des terminaux ne comprenant pas de moyens de saisie mais dans lesquels des informations confidentielles sont stockées. Dans ce cas, la détection par les moyens de traitement de l'ouverture du terminal entraîne par exemple l'effacement des données confidentielles stockées dans ce terminal.

La fausse touche peut être seule et dissociée d'une membrane de clavier, pour réaliser la même fonction de protection d'un boîtier électronique, dans le cas où celui-ci ne comporte pas de clavier où pour détecter l'ouverture de la partie inférieure du boîtier.

### REFERENCES

- 1: boîtier,
- 10: capot,
- 101: portion supérieure de capot,
- 102: portion inférieure de capot,
- 13: ouverture traversante,
- 20: écran d'affichage,
- 30: carte électronique,
- 31: contact électriquement conducteur des touches du clavier,
- 32, 33: bornes électriquement conductrices des fausses touches,
- 40: membrane souple,
- 41: touche,
- 42: lèvre,
- 43: partie électriquement conductrice,
- 44: fausse touche
- 45: circuit de protection,
- 451: piste de connexion
- 452: piste électriquement conductrice
- 453: substrat
- 454: pont électriquement conducteur
- 455: couche isolante

## Revendications

1. Dispositif anti-intrusion pour un boîtier (1) comprenant :
o au moins deux bornes électriquement conductrices (32, 33) distinctes disposées sur une carte électronique (30) et reliées à des moyens de traitement,
o au moins un élément (44) comportant un circuit de protection (45) disposé en regard des deux bornes électriquement conductrices (32, 33) et reliant les bornes électriquement conductrices (32, 33) de manière à fermer un circuit électrique dans une position normale d'utilisation du boîtier (1),
le circuit de protection comprenant au moins une piste électriquement conductrice (452) disposée de manière à être sectionnée lors d'une intrusion par perçage ou découpage au niveau de l'élément, **caracterisé en ce que** l'élément est un élément mobile, l'élément mobile et le circuit de protection étant disposés de manière à assurer l'ouverture du circuit électrique fermé suite au déplacement du boîtier relativement au dispositif.

2. Dispositif selon la revendication 1, **caractérisé en ce que** la piste électriquement conductrice (452) est disposée dans au moins un substrat (453).

3. Dispositif selon la revendication précédente, **caractérisé en ce que** le substrat (453) comprend au moins deux pistes de connexion (451) disposées sur une des faces du substrat (453), les deux pistes de connexion (451) s'étendant dans un plan (P1) distinct d'un plan (P2) dans lequel s'étend la piste électriquement conductrice (452) et étant reliées à celle-ci par au moins deux ponts (454).

4. Dispositif selon la revendication précédente, **caractérisé en ce que** les pistes de connexion (451) sont réalisées en carbone et la piste électriquement conductrice (452) est réalisée en cuivre.

5. Dispositif selon l'une des deux revendications précédentes, **caractérisé en ce que** les pistes de connexion (451) sont disposées dans une région centrale du substrat (453).

6. Dispositif selon l'une des revendications précédentes, **caractérisé en ce que** la piste électriquement conductrice (452) est une piste en forme de treillis.

7. Dispositif selon la revendication précédente, **caractérisé en ce que** le pas du treillis est inférieure à 1 millimètres, préférentiellement inférieure à 0.5 millimètres, et encore plus préférentiellement environ égale à 0.3 millimètres.

8. Dispositif selon l'une des six revendications précédentes, **caractérisé en ce que** le substrat (453) est souple et recouvre en totalité la surface supérieure de la carte électronique (30).

9. Dispositif selon l'une des sept revendications précédentes, **caractérisé en ce que** le substrat (453) comprend une couche opaque.

10. Dispositif selon l'une des revendications précédentes, **caractérisé en ce que** les bornes électriquement conductrices (32, 33) de la carte électronique (30) présentent une symétrie de révolution.

## Claims

1. Anti-intrusion device for a casing (1), comprising:
• at least two distinct electrically conductive terminals (32, 33) positioned on an electronic card (30) and connected to processing means;
• at least one element (44) comprising a protective circuit (45) positioned opposite the two electrically conductive terminals (32, 33) and connecting said electrically conductive terminals (32, 33) electrically in such a way as to close an electrical circuit when the casing (1) is in a normal position of use;
the protective circuit comprising at least one electrically conductive track (452) which is disposed in such a way as to be severed in the event of an intrusion by piercing or cutting at the element, **characterised in that** the element is a movable element, said movable element and the protective circuit being positioned in such a way as to bring about the opening of the closed electrical circuit in response to displacement of the casing relative to the device.

2. Device according to claim 1, **characterised in that** the electrically conductive track (452) is positioned in at least one substrate (453).

3. Device according to the preceding claim, **characterised in that** the substrate (453) comprises at least two connection tracks (451) positioned on one of the faces of the substrate (453), said two connection tracks (451) extending in a plane (p1) which is distinct from a plane (p2) in which the electrically conductive track (452) extends and being connected to the latter by at least two bridges (454).

4. Device according to the preceding claim, **characterised in that** the connection tracks (451) are made of carbon and the electrically conductive track (452) is made of copper.

5. Device according to either of the two preceding claims, **characterised in that** the connection tracks (451) are positioned in a central region of the substrate (453).

6. Device according to one of the preceding claims, **characterised in that** the electrically conductive track (452) is a mesh-shaped track.

7. Device according to the preceding claim, **characterised in that** the pitch of the mesh is less than 1 millimetre, preferably less than 0.5 millimetre, and still more preferably, about equal to 0.3 millimetre.

8. Device according to one of the six preceding claims, **characterised in that** the substrate (453) is flexible and completely covers the upper surface of the electronic card (30).

9. Device according to one of the seven preceding claims, **characterised in that** the substrate (453) comprises an opaque layer.

10. Device according to one of the preceding claims, **characterised in that** the electrically conductive terminals (32, 33) of the electronic card (30) have symmetry of revolution.

## Patentansprüche

1. Einbruchschutzvorrichtung für ein Gehäuse (1), mit:
• mindestens zwei getrennten elektrisch leitenden Klemmen (32, 33), die auf einer Elektronikkarte (30) angeordnet und mit Verarbeitungsmitteln verbunden sind,
• mindestens einem Element (44), das eine Schutzschaltung (45) aufweist, die den zwei elektrisch leitenden Klemmen (32, 33) gegenüber angeordnet ist und die elektrisch leitenden Klemmen (32, 33) derart verbindet, dass eine elektrische Schaltung in einer normalen Gebrauchsposition des Gehäuses (1) geschlossen wird,
wobei die Schutzschaltung mindestens eine elektrische leitende Bahn (452) aufweist, die derart angeordnet ist, dass sie bei einem Einbruch durch Bohren oder Schneiden auf dem Niveau des Elements durchtrennt wird, **dadurch gekennzeichnet, dass** das Element ein bewegliches Element ist, wobei das bewegliche Element und die Schutzschaltung derart angeordnet sind, dass sie das Öffnen der elektrischen Schaltung sicherstellen, die im Anschluss an das Bewegen des Gehäuses in Bezug zu der Vorrichtung geschlossen wurde.

2. Vorrichtung nach Anspruch 1, **dadurch gekennzeichnet, dass** die elektrisch leitende Bahn (452) in mindestens einem Substrat (453) angeordnet ist.

3. Vorrichtung nach dem vorhergehenden Anspruch, **dadurch gekennzeichnet, dass** das Substrat (453) mindestens zwei Verbindungsbahnen (451) aufweist, die auf einer der Seiten des Substrats (453) angeordnet sind, wobei sich die zwei Verbindungsbahnen (451) in einer Ebene (P1) erstrecken, die von einer Ebene (P2), in der sich die elektrisch leitende Bahn (452) erstreckt, getrennt ist, und mit dieser durch mindestens zwei Brücken (454) verbunden sind.

4. Vorrichtung nach dem vorhergehenden Anspruch, **dadurch gekennzeichnet, dass** die Verbindungsbahnen (451) aus Kohlenstoff hergestellt sind, und dass die elektrisch leitende Bahn (452) aus Kupfer hergestellt ist.

5. Vorrichtung nach einem der zwei vorhergehenden Ansprüche, **dadurch gekennzeichnet, dass** die Verbindungsbahnen (451) in einem zentralen Bereich des Substrats (453) angeordnet sind.

6. Vorrichtung nach einem der vorhergehenden Ansprüche, **dadurch gekennzeichnet, dass** die elektrisch leitende Bahn (452) eine Bahn mit Gitterform ist.

7. Vorrichtung nach dem vorhergehenden Anspruch, **dadurch gekennzeichnet, dass** die Maschenweite des Gitters kleiner ist als 1 Millimeter, vorzugsweise kleiner als 0,5 Millimeter und noch bevorzugter in etwa gleich 0,3 Millimeter.

8. Vorrichtung nach einem der sechs vorhergehenden Ansprüche, **dadurch gekennzeichnet, dass** das Substrat (453) biegsam ist und die obere Fläche der Elektronikkarte (30) komplett abdeckt.

9. Vorrichtung nach einem der sieben vorhergehenden Ansprüche, **dadurch gekennzeichnet, dass** das Substrat (453) eine undurchsichtige Schicht aufweist.

10. Vorrichtung nach einem der vorhergehenden Ansprüche, **dadurch gekennzeichnet, dass** die leitenden elektrischen Klemmen (32, 33) der Elektronikkarte (30) eine Rotationssymmetrie aufweisen.
